(19) Europäisches Patentamt
European Patent Office
Office européen des brevets

(11) **EP 3 011 801 B1**

(12) **FASCICULE DE BREVET EUROPEEN**

(45) Date de publication et mention de la délivrance du brevet:
**17.04.2019 Bulletin 2019/16**

(21) Numéro de dépôt: **14725120.1**

(22) Date de dépôt: **15.05.2014**

(51) Int Cl.:
**B60H 1/22** (2006.01)   **H05B 1/02** (2006.01)

(86) Numéro de dépôt international:
**PCT/EP2014/060031**

(87) Numéro de publication internationale:
**WO 2014/202293 (24.12.2014 Gazette 2014/52)**

(54) **COMMANDE D'UN CIRCUIT DE CHAUFFAGE ELECTRIQUE, NOTAMMENT POUR VEHICULE AUTOMOBILE**

STEUERUNG FÜR EINE ELEKTRISCHE HEIZSCHALTUNG, INSBESONDERE FÜR KRAFTFAHRZEUGE

CONTROL FOR ELECTRICAL HEATING CIRCUIT, IN PARTICULAR FOR MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2013 FR 1355673**

(43) Date de publication de la demande:
**27.04.2016 Bulletin 2016/17**

(73) Titulaire: **Valeo Systemes Thermiques**
**78320 Le Mesnil-Saint-Denis Cedex (FR)**

(72) Inventeurs:
• **TELLIER, Laurent**
  **F-75116 Paris (FR)**

• **PUZENAT, Bertrand**
  **F-78180 Montigny-le-Bretonneux (FR)**

(74) Mandataire: **Metz, Gaëlle**
**Valeo Systèmes Thermiques**
**8, rue Louis Lormand**
**CS 80517 La Verrière**
**78322 Le Mesnil Saint Denis Cedex (FR)**

(56) Documents cités:
| | |
|---|---|
| EP-A1- 1 371 519 | DE-A1-102008 056 757 |
| DE-B3-102010 005 671 | JP-A- 2009 191 842 |
| US-A- 3 733 463 | US-A1- 2004 099 653 |
| US-A1- 2005 061 798 | |

**Description**

La présente invention concerne de manière générale la commande d'un circuit de chauffage électrique comportant une pluralité d'éléments chauffants connectés en parallèle.

L'invention concerne notamment le domaine de l'automobile dans lequel il est connu d'installer un circuit de chauffage électrique (réchauffeur ou radiateur additionnel) dans le système de chauffage, ventilation et climatisation d'un véhicule à moteur thermique pour assurer le chauffage rapide de l'habitacle en début de fonctionnement du véhicule, et avant que la thermique du moteur lui-même n'assure un tel chauffage. Le réchauffeur électrique est utilisé tout particulièrement pour réchauffer l'eau du circuit de refroidissement du véhicule. Il comporte généralement une pluralité d'éléments résistifs chauffants connectés en parallèle, de préférence des éléments CTP (Coefficient de Température Positif), qui doivent être commandés en fonction d'une consigne de fonctionnement.

Le document DE102010005671 B3 divulgue un circuit de commande d'une résistance de chauffage basé sur un signal de commande de Modulation à Largeur d'Impulsion, MLI.

A ce jour, les radiateurs électriques à électronique embarquée ont une consigne de fonctionnement pouvant être de trois types :

Pour les radiateurs à commande dite « logique », deux fils de consignes sont connectés en entrée d'un dispositif de commande qui permet par combinatoire de contrôler jusqu'à trois éléments chauffants afin d'atteindre quatre niveaux de puissance différents (0 %, 33 %, 67 %, 100 %). Ce fonctionnement permet de contrôler séparément chaque élément, tout en utilisant des électroniques de commande simple où la présence d'un microcontrôleur est inutile. Néanmoins, cette solution nécessite au moins deux fils de consignes.

Pour les radiateurs à commande dite MLI (initiales en langue française pour « Modulation de Largeur d'Impulsion ») ou PWM (initiales anglo-saxonnes mises pour « Pulse Width Modulation »), un unique fil de consigne permet d'amener la consigne de puissance sous la forme d'un signal PWM à basse fréquence (typiquement de l'ordre de quelques dizaines ou centaines de Hertz). Ce dernier comporte un microcontrôleur qui interprète la consigne de puissance reçue et pilote proportionnellement (ou selon une loi plus complexe) les éléments chauffants, généralement en utilisant également des signaux de commande PWM à des fréquences plus basses que celle du signal PWM utilisé pour la consigne de puissance. Dans ce cas, le contrôle ne se fait donc pas élément par élément. En outre, bien que plus précise, cette solution est coûteuse compte tenu de la nécessité d'avoir un microcontrôleur.

Enfin, selon une variante possible aux radiateurs à commande MLI, certains radiateurs à commande par Bus ont été développés, pour lesquels la consigne de puissance arrive non pas sous forme d'un signal PWM, mais sous forme d'un signal numérique véhiculé par un bus de communication de type LIN, CAN ou équivalent. Ici encore, la présence d'un microcontrôleur est indispensable.

La présente invention a pour but de proposer une solution permettant de combiner les avantages offerts par les solutions connues, sans en présenter les inconvénients. En particulier, la solution proposée permet au dispositif de commande de commander le circuit de chauffage à partir d'un signal de consigne PWM reçu sur un fil de consigne unique, sans avoir recours à un microcontrôleur.

Le présent exemple propose un procédé pour la commande d'un circuit de chauffage électrique comportant un nombre N d'éléments chauffants connectés en parallèle, chaque élément chauffant étant apte à être connecté en série avec un interrupteur électronique associé, le procédé comportant les étapes suivantes :

- réception d'une consigne de puissance sous la forme d'un signal de commande MLI de rapport cyclique variable en fonction de la puissance ;
- extraction d'une valeur moyenne du signal de commande MLI reçu ;
- réalisation de P comparaisons, l'entier P étant inférieur ou égal à N, de la valeur moyenne extraite avec P valeurs seuil distinctes et génération de P signaux de comparaison, chaque signal de comparaison servant à commander un basculement de l'interrupteur électronique associé à au moins un élément chauffant en position ouverte ou fermée.

Selon d'autres caractéristiques possibles :

- l'entier P est égal à N, de manière à ce que chaque signal de comparaison serve à commander l'interrupteur électronique associé à un seul élément chauffant.
- Pour chacune des P comparaisons, le signal de comparaison généré est apte à :

  ◦ commander un basculement de l'interrupteur électronique associé en position ouverte si la valeur moyenne extraite est inférieure à la valeur seuil ;
  ◦ commander un basculement de l'interrupteur électronique associé en position fermée sinon.

L'invention a pour objet un dispositif de commande d'un circuit de chauffage électrique comportant un nombre N d'éléments chauffants connectés en parallèle, le dispositif de commande comportant :

- N interrupteurs électroniques, chacun apte à être connecté en série avec l'un des N éléments chauffants ;
- un module électronique de réception apte à recevoir une consigne de puissance sous la forme d'un signal de commande MLI de rapport cyclique variable en fonction de la puissance ;

- des moyens d'extraction d'une valeur moyenne du signal de commande en Modulation à Largeur d'Impulsion MLI reçu; tels qu'un filtre RC passe-bas dont la constante de temps est très supérieure à la période du signal;
- P comparateurs, l'entier P étant inférieur ou égal à N, aptes à comparer la valeur moyenne extraite avec P valeurs seuil distinctes et générer P signaux de comparaison, chaque signal de comparaison servant à commander un basculement de l'interrupteur électronique associé à au moins un élément chauffant en position ouverte ou fermée.

Avantageusement, le dispositif de commande comporte en outre des moyens de génération des P valeurs seuil. Ces moyens comprennent un pont diviseur avec P+1 résistances en série, sous une tension de référence, chaque point de liaison entre deux résistances du pont diviseur donnant une valeur seuil croissante entre deux points de liaison successifs chaque comparateur ayant sa sortie connectée sur l'entrée de l'interrupteur et chaque comparateur du dispositif est apte à délivrer un signal de comparaison lui-même apte à :

- commander un basculement de l'interrupteur électronique associé en position ouverte si la valeur moyenne extraite est inférieure à la valeur seuil ;
- commander un basculement de l'interrupteur électronique associé en position fermée sinon.

L'invention sera mieux comprise, et d'autres buts, détails, caractéristiques et avantages de celle-ci apparaîtront plus clairement au cours de la description suivante de modes de réalisations particuliers de l'invention, donnée uniquement à titre illustratif et non limitatif, en référence aux dessins annexés, sur lequel :

- la figure 1 illustre sous forme de synoptique simplifié un exemple de dispositif de commande conforme à la présente invention ;
- la figure 2 illustre des étapes mises en oeuvre selon un exemple ;
- la figure 3 donne un exemple de mise en oeuvre d'un sous-ensemble compris dans le dispositif de commande de la figure 1 pour la génération de tensions continues de référence ;
- la figure 4 donne un exemple de mise en oeuvre d'un autre sous-ensemble compris dans le dispositif de commande de la figure 1.

Dans les différentes figures annexées, les éléments communs portent les mêmes références.

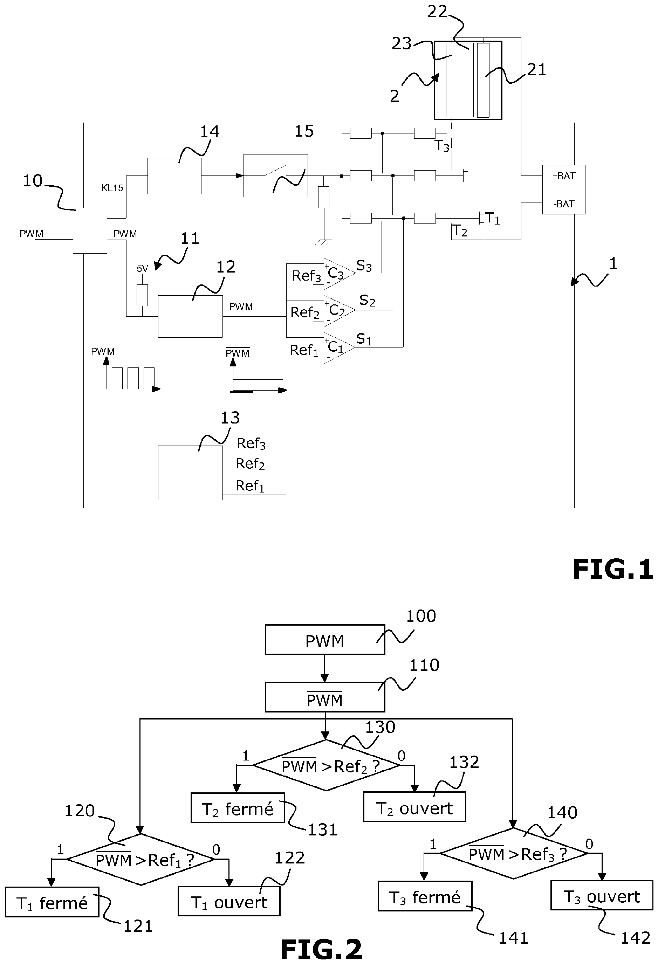

La figure 1 illustre, sous forme simplifiée, un exemple de réalisation d'un dispositif 1 de commande d'un circuit 2 de chauffage, à partir d'une consigne de puissance reçue sous la forme d'un signal PWM sur un fil de consigne unique. A titre d'exemple non limitatif, le circuit 2 de chauffage est ici composé de trois résistances 21, 22, 23 de chauffage, de préférence des résistances CTP, connectées en parallèle. Le dispositif 1 de commande comporte, de manière classique, trois interrupteurs $T_1$, $T_2$ et $T_3$ électroniques, par exemple trois transistors de puissance MOS, chacun étant apte à être connecté en série avec l'une des trois résistances 21, 22, 23 de chauffage, et à permettre à ou empêcher un courant de traverser ces résistances en fonction de leur état fermé ou ouvert.
Le signal PWM est un signal périodique de période T constante, correspondant à une fréquence de l'ordre de quelques dizaines de Hertz. Au cours d'une période T, le signal PWM alterne entre un niveau haut et un niveau bas. Les caractéristiques de cette alternance permettent d'informer le dispositif 1 des consignes de puissance à appliquer.
Dans certains cas, le signal PWM peut être délivré par la sortie d'un transistor bipolaire ou MOS utilisé en émetteur (respectivement source) ouvert.
En variante, le signal PWM est délivré par la sortie d'une paire de transistors montés en push-pull.
Les deux façons de générer le signal PWM sont équivalentes du point de vue de la présente invention. En particulier, dans les deux cas, la puissance de fonctionnement requise est communiquée grâce au rapport cyclique du signal PWM, ce rapport cyclique étant défini comme étant la durée de maintien à l'état haut sur la période du signal PWM. Dans certains cas, fixés par convention, la puissance de fonctionnement requise est communiquée grâce au rapport cyclique négatif du signal PWM, ce rapport cyclique négatif étant défini comme étant la durée de maintien à l'état bas sur la période du signal PWM.
Dans la suite de l'exposé, on a supposé, à titre non limitatif, que le signal PWM provient d'un transistor en collecteur ou drain ouvert, et que la puissance requise est communiquée par le rapport cyclique négatif. Dans ce cas, plus le rapport cyclique négatif est élevé, plus la puissance requise est grande. Par exemple, à une variation entre 5 % et 95 % du rapport cyclique négatif correspondra une variation de 100 % à 0 % de la puissance maximale de chauffage, la puissance maximale de chauffage étant obtenue lorsque toutes les résistances de chauffage 21-23 sont simultanément en fonctionnement.
En référence aux figures 1 et 2, le signal PWM est tout d'abord reçu, lors d'une étape 100, par le dispositif 1 de commande au niveau d'un connecteur formant module 10 électronique de réception. Compte tenu du fait que ce signal PWM correspond à la sortie d'un transistor bipolaire ou MOS à collecteur ou drain ouvert, une résistance 11 de tirage d'un circuit pull-up est classiquement utilisée pour tirer le signal PWM vers une tension de référence, par exemple de 5 Volts. L'allure du signal PWM est illustrée schématiquement en dessous de la résistance 11 de tirage.

Conformément à l'invention, le dispositif 1 va alors transformer le signal PWM reçu en un signal quasi constant dont la valeur est sensiblement proportionnelle au rapport cyclique (dans l'exemple négatif) du signal PWM. Pour ce faire, le dispositif 1 va extraire, lors d'une étape d'extraction 110, la valeur moyenne $\overline{PWM}$ du signal PWM de commande MLI reçu. Ceci peut être obtenu très simplement en utilisant comme moyen 12 d'extraction un filtre RC passe-bas dont la constante de temps est très supérieure à la période T du signal PWM. A titre d'exemple, on peut utiliser une résistance dont la valeur est de l'ordre de 4,7 KOhms, et un condensateur dont la capacité est de l'ordre de 10 μFarads.

L'allure du signal moyenné $\overline{PWM}$ ainsi obtenu à l'issue de l'étape 110 est illustrée schématiquement sur la figure 1.

Le signal moyenné $\overline{PWM}$ va ensuite faire l'objet de trois comparaisons (étapes 120, 130 et 140 sur la figure 2) avec trois valeurs seuil $Ref_1$, $Ref_2$ et $Ref_3$ distinctes.

Pour ce faire, le dispositif 1 comporte des moyens 13 de génération des trois valeurs seuil, ainsi que trois comparateurs $C_1$, $C_2$, $C_3$, chaque comparateur $C_i$ (entier i variant de 1 à 3) ayant sa sortie connectée sur l'entrée (ici la grille) du transistor $T_i$.

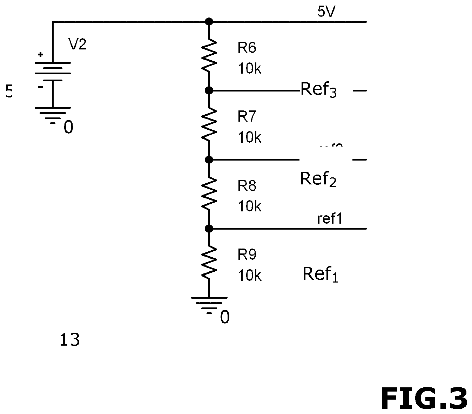

Comme illustré sur la figure 3, les moyens 13 de génération des trois valeurs seuils peuvent être réalisés très simplement à partir d'un pont diviseur comportant quatre résistances R6 à R9 en série, sous la tension de référence. Chaque point de liaison entre deux résistances donne une valeur seuil $Ref_1$, $Ref_2$ et $Ref_3$ telles que

$$Ref_1 < Ref_2 < Ref_3$$

Les résistances R6 à R9 ont de préférence la même valeur de façon à donner un poids identique à chacune des résistances 21 à 23 de chauffage.

Les signaux $S_1$ à $S_3$ de comparaison générés en sortie des comparateurs $C_1$ à $C_3$ vont servir à commander un basculement de l'interrupteur $T_1$ à $T_3$ électronique associé à au moins un élément chauffant en position ouverte ou fermée.

A titre d'exemple, le signal $S_i$ (i variant de 1 à 3) de comparaison généré en sortie du comparateur $C_i$ est apte à :

- commander un basculement de l'interrupteur électronique $T_i$ associé en position ouverte si la valeur moyenne $\overline{PWM}$ extraite est inférieure à la valeur seuil $Ref_i$ (Etapes 122, 132 et 142 sur la figure 2) ;
- commander un basculement de l'interrupteur électronique $T_i$ associé en position fermée sinon (Etapes 121, 131, 141 sur la figure 2).

Le dispositif 1 de commande selon l'invention permet ainsi de discrétiser le signal PWM reçu en quelques niveaux de puissance, ici trois niveaux de puissance correspondant aux trois valeurs seuil $Ref_1$, $Ref_2$ et $Ref_3$, pour permettre un contrôle par pas d'au moins un élément chauffant.

Dans un mode de réalisation préféré, on génère autant de valeurs seuil qu'il y a de résistances chauffantes à contrôler.

Ainsi, dans l'exemple donné, il est possible de commander le fonctionnement simultané :

- de zéro élément chauffant, par exemple avec un rapport cyclique négatif de l'ordre de 5 %. Dans ce cas, tous les interrupteurs $T_1$ à $T_3$ sont ouverts.
- d'un seul élément chauffant, typiquement de la résistance 21, avec un rapport cyclique négatif de l'ordre de 25 %. Dans ce cas, seul l'interrupteur $T_1$ est fermé et les interrupteurs $T_2$ et $T_3$ sont ouverts.
- de deux éléments chauffants, typiquement des résistances 21 à 22, avec un rapport cyclique négatif de l'ordre de 50 %. Dans ce cas, les interrupteurs $T_1$ et $T_2$ sont fermés et seul l'interrupteur $T_3$ est ouvert.
- des trois éléments chauffants 21 à 23, avec un rapport cyclique négatif de l'ordre de 75 %. Dans ce cas, tous les interrupteurs $T_1$ à $T_3$ sont fermés.

Néanmoins, on peut envisager, sans départir du cadre de l'invention, de faire un nombre P de comparaisons qui soit inférieur au nombre N d'éléments chauffants à contrôler, et d'utiliser alors la sortie d'un comparateur pour contrôler plusieurs éléments chauffants.

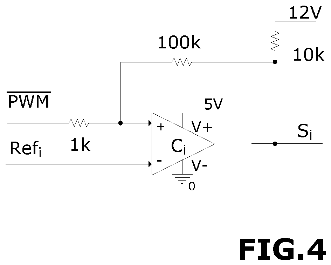

Pour éviter tout risque de pompage dans le cas où la valeur moyenne $\overline{PWM}$ serait proche de l'une des valeurs seuils, chaque comparateur $C_i$ est de préférence associé à un circuit d'hystérésis. Un exemple de réalisation est illustré sur la figure 4, sur lequel l'hystérésis est obtenue par une boucle de rétroaction de la sortie du comparateur sur l'entrée positive du comparateur $C_i$, au travers d'une résistance.

De retour à la figure 1, et bien que cela n'ait pas de rapport direct avec le principe de l'invention, le connecteur 10 formant moyen de réception du signal PWM est en outre avantageusement apte à recevoir également un signal KL15 correspondant à la tension de batterie du véhicule, typiquement de l'ordre de 12 Volts, seulement lorsque le moteur du système de chauffage, ventilation et climatisation du véhicule est effectivement en fonctionnement. Ce signal KL15 se retrouve ainsi combiné aux signaux $S_i$ sur les grilles des transistors Ti. Différentes protections sont avantageusement utilisées, telles qu'un filtre de protection 14, et un interrupteur 15 de protection susceptible de basculer en position ouverte par exemple dans le cas de surcharge ou de sous charge en tension.

## Revendications

1.  Dispositif (1) de commande d'un circuit (2) de chauffage électrique comportant un nombre N d'éléments chauffants (21-23) connectés en parallèle, le dispositif (1) de commande comportant :

    - N interrupteurs électroniques ($T_1$-$T_3$), chacun apte à être connecté en série avec l'un des N éléments chauffants (21-23) ;
    - un module (10) électronique de réception apte à recevoir une consigne de puissance sous la forme d'un signal (PWM) de commande MLI de rapport cyclique variable en fonction de la puissance ;
    - des moyens (12) d'extraction d'une valeur moyenne ($\overline{PWM}$) du signal (PWM) de commande Modulation à Largeur d'Impulsion (MLI) reçu, tels qu'un filtre RC passe-bas dont la constante de temps est très supérieure à la période (T) du signal (PWM) ;
    - P comparateurs ($C_1$-$C_3$), l'entier P étant inférieur ou égal à N, aptes à comparer la valeur moyenne ($\overline{PWM}$) extraite avec P valeurs seuil ($Ref_1$
    - $Ref_3$) distinctes et générer P signaux de comparaison ($S_1$-$S_3$), chaque signal de comparaison servant à commander un basculement de l'interrupteur ($T_1$-$T_3$) électronique associé à au moins un élément chauffant en position ouverte ou fermée, chaque comparateur (C1-C3) ayant sa sortie connectée sur l'entrée de l'interrupteur (T1-T3) et chaque comparateur (C1-C3) est apte à délivrer un signal (S1-S3) de comparaison apte à :

        - commander (122, 132, 142) un basculement de l'interrupteur électronique associé en position ouverte si la valeur moyenne ($\overline{PWM}$) extraite est inférieure à la valeur seuil ;
        - commander (121, 131, 141) un basculement de l'interrupteur électronique (Ti) associé en position fermée sinon ;

    - des moyens (13) de génération des P valeurs seuil ($Ref_1$ - $Ref_3$), lesdits moyens de génération comprennent un pont diviseur avec P+1 résistances en série, sous une tension de référence, chaque point de liaison entre deux résistances du pont diviseur donnant une valeur seuil croissante entre deux points de liaison successifs.

2.  Dispositif (1) de commande selon la revendication 1, **caractérisé en ce que** les résistances en série du pont diviseur ont la même valeur.

3.  Dispositif (1) de commande selon l'une des revendications 1 et 2, **caractérisé en ce que** chaque comparateur (Ci) est associé à un circuit d'hystérésis.

4.  Dispositif (1) de commande selon la revendication 3, **caractérisé en ce que** le circuit d'hystérésis comporte une boucle de rétroaction de la sortie du comparateur sur l'entrée positive du comparateur (Ci), au travers d'une résistance.

## Patentansprüche

1.  Vorrichtung (1) für die Steuerung eines elektrischen Heizkreises (2), der eine Anzahl N Heizelemente (21-23) enthält, die parallel geschaltet sind, wobei die Steuervorrichtung (1) Folgendes umfasst:

    - N elektronische Schalter ($T_1$-$T_3$), wovon jeder mit einem der N Heizelemente (21-23) in Reihe geschaltet ist;
    - ein elektronisches Empfangsmodul (10), das einen Leistungssollwert in Form eines MLI-Steuersignals (PWM) mit einem als Funktion der Leistung variablen Tastgrad empfangen kann;
    - Mittel (12) für die Extraktion eines Mittelwerts ($\overline{PWM}$) des empfangenen Impulsbreitenmodulations-Steuersignals (PWM) wie etwa ein Tiefpassfilter RC, dessen Zeitkonstante gegenüber der Periode (T) des Signals (PWM) sehr groß ist;
    - P Komparatoren ($C_1$-$C_3$), wobei die ganze Zahl P kleiner oder gleich N ist, die den extrahierten Mittelwert ($\overline{PWM}$) mit P verschiedenen Werten ($Ref_1$-$Ref_3$) vergleichen können und P Vergleichssignale ($S_1$-$S_3$) erzeugen können, wobei jedes Vergleichssignal dazu dient, ein Schalten des elektronischen Schalters ($T_1$-$T_3$), der wenigstens einem Heizelement zugeordnet ist, in die geöffnete oder geschlossene Position zu steuern, wobei jeder Komparator ($C_1$-$C_3$) mit seinem Ausgang mit dem Eingang des Schalters ($T_1$-$T_3$) verbunden ist und wobei jeder Komparator ($C_1$-$C_3$) ein Vergleichssignal ($S_1$-$S_3$) ausgeben kann, das geeignet ist zum:
    - Steuern (122, 132, 142) des Schaltens des zugeordneten elektronischen Schalters in die geöffnete Position, falls der extrahierte Mittelwert ($\overline{PWM}$) kleiner als der Schwellenwert ist;
    - andernfalls Steuern (121, 131, 141) des Schaltens des zugeordneten elektronischen Schalters (Ti) in die geschlossene Position;
    - Mittel (13) zum Erzeugen von P Schwellenwerten ($Ref_1$-$Ref_3$), wobei die Erzeugungsmittel eine Teilerbrücke mit P + 1 in Reihe geschalteten Widerständen unter einer Referenzspannung enthalten, wobei jeder Verbindungspunkt zwischen zwei Widerständen der Teilerbrücke einen zwischen zwei aufeinander folgenden Verbindungspunkten zunehmenden Schwellenwert bereitstellt.

**2.** Steuervorrichtung (1) nach Anspruch 1, **dadurch gekennzeichnet, dass** die Reihenwiderstände der Teilerbrücke denselben Wert haben.

**3.** Steuervorrichtung (1) nach einem der Ansprüche 1 und 2, **dadurch gekennzeichnet, dass** jeder Komparator ($C_i$) einer Hystereseschaltung zugeordnet ist.

**4.** Steuervorrichtung (1) nach Anspruch 3, **dadurch gekennzeichnet, dass** die Hystereseschaltung eine Schleife für die Rückkopplung des Ausgangs des Komparators an den positiven Eingang des Komparators ($C_i$) über einen Widerstand umfasst.

**Claims**

**1.** Control device (1) for controlling an electric heating circuit (2) including a number N of heating elements (21-23) that are connected in parallel, the control device (1) including:

- N electronic switches ($T_1$-$T_3$), each one being capable of being connected in series with one of the N heating elements (21-23);
- an electronic receiver module (10) that is capable of receiving a power setpoint in the form of a PWM control signal (PWM) having a duty cycle that varies with power;
- means (12) for extracting a mean value (PWM) from the received pulse-width modulation (PWM) control signal (PWM), such as a low-pass RC filter having a time constant that is much higher than the period (T) of the signal (PWM);
- P comparators ($C_1$-$C_3$), the integer P being smaller than or equal to N, that are capable of comparing the extracted mean value (PWM) with P distinct threshold values ($Ref_1$- $Ref_3$) and generating P comparison signals ($S_1$-$S_3$), each comparison signal being used to control an operation of switching the electronic switch ($T_1$-$T_3$) that is associated with at least one heating element to an open or closed position, each comparator ($C_1$-$C_3$) having its output connected to the input of the switch ($T_1$-$T_3$) and each comparator ($C_1$-$C_3$) is capable of delivering a comparison signal ($S_1$-$S_3$)that is capable of:

- controlling (122, 132, 142) an operation of switching the associated electronic switch to the open position if the extracted mean value (PWM) is lower than the threshold value;
- else, controlling (121, 131, 141) an operation of switching the associated electronic switch (Ti) to the closed position;

- means (13) for generating the P threshold values ($Ref_1$- $Ref_3$), said generating means comprising a divider bridge with P+1 resistors in series, under a reference voltage, each point of connection between two resistors of the divider bridge resulting in a threshold value that increases between two successive points of connection.

**2.** Control device (1) according to Claim 1, **characterized in that** the series resistors of the divider bridge have the same value.

**3.** Control device (1) according to either of Claims 1 and 2, **characterized in that** each comparator (Ci) is associated with a hysteresis circuit.

**4.** Control device (1) according to Claim 3, **characterized in that** the hysteresis circuit includes a feedback loop from the output of the comparator to the positive input of the comparator (Ci), through a resistor.

FIG.1

FIG.2

**FIG.3**

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010005671 B3